# EUROPEAN PATENT APPLICATION

(11) **EP 0 869 499 A1**
(43) Date of publication of application: **07.10.1998**
(21) Application number: 98201038.1
(22) Date of filing: 03.04.1998
(51) Int. Cl.: G11B 23/087

(54) **Video tape cassette provided with a resuable tab**

(30) Priority: 03.04.1997 NL 1005717
(71) Applicant: Jansen, Arthur Charles, 2513 RW Den Haag (NL)
(72) Inventor: Jansen, Arthur Charles, 2513 RW Den Haag (NL)

(57) **Abstract**

The invention is connected to a videotape, provide with a Videoclip, for repeatedly using, and is going to be the stand in and the improvement off the recording defeat tab.

To prevent accedental erasure off prerecorded tapes, remove the recording defeat tab, with a screwdriver.

To record over videotapes, with the recording defeat tab removed, cover the hole with adhesive tape.

The recording defeat tab is, after removing, useless and the problem with the adhesive tape is that it has to cover the hole very tight otherwise the videorecorder doesn't record at all, to put an end to the using off adhesive tape the Videoclip can be put very easy in the hole, it's also very easy to remove, time after time.

The Videoclip is for a longer, better and more security life off prerecorded tapes.

## Description

The invention is connected to a videotape, provide with a videoclip, which by means off an easy way to fix and an easy way to remove, can be used repeatedly, time after time again.

The invention becomes the stand in and the improvement, off the recording defeat tab.

A videotape is standard provide with a recording defeat tab.

To prevent accidental erasure off prerecorded tapes, break off the recording defeat tab with a screwdriver.

When the recording defeat tab is removed it can not be used again.

To record over tapes, with the recording defeat tab removed, cover the hole with adhesive tape.

The intended result off the invention is the in this way security device, from the videotape considerable to improve.

The invention (Videoclip) has to be placed in the hole.

The Videoclip is proved with a remove lip, this part is laying on the videotape, for an easy way to remove the Videoclip out off the hole.

This means a longer and better security.

The Videoclip can be used time after time again.

The Videoclip stands for a better and longer security off prerecorded videotapes and also the easy way to put the Videoclip in and out off the hole, is better than to search for adhesive tape, and hope that it will stick over the hole, if not the videorecorder will not record.

The invention is in the following further appiled on the basis off the drawings on pag. 3 and pag. 4.

In which **fig. A** (pag. 3) shows the videotape (1). The videotape (1) is proved with a recording defeat tab (3), after removing this object, the hole (2) appears.

**Fig. B** (pag. 3) shows a videotape (1) with such a hole (2).

**Fig. C** (pag. 3) shows the recording defeat tab (3) when it's removed from the videotape (with a screwdriver). The recording defeat tab (3) is now useless.

On pag. 4 the invention is showed in a clear exposition off using, that's why **fig. D**, again, shows the hole (2) from the videotape (1), because this is gonna be the place to put the invention, for using it.

**Fig. E** (pag. 4) shows the invention: THE VIDEOCLIP (4), visible when it's put in the hole (2) and the continuation (5) lays on the videotape (1), this part (5), makes it easy to remove the Videoclip (4) out off the hole, there for the Videoclip (4) can be used repeatedly. (time after time again).

The part, off the Videoclip (4), which is laying in the hole (2), is in **fig. E** marked with the number 6.

The Videoclip (4) sticks in the hole (2) because off the elasticity (7), it can not fall out.

Because the Videoclip (4) in **fig. F** (pag. 4) is now visible sideways, the continuation (5) is now narrow in comparison with the part numberd with a (6), which otherwise is put in the hole (2).

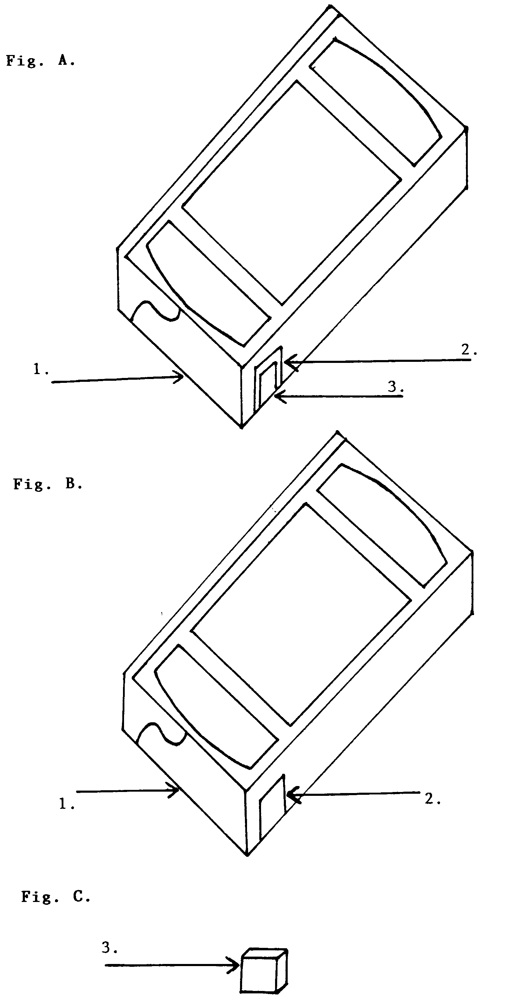

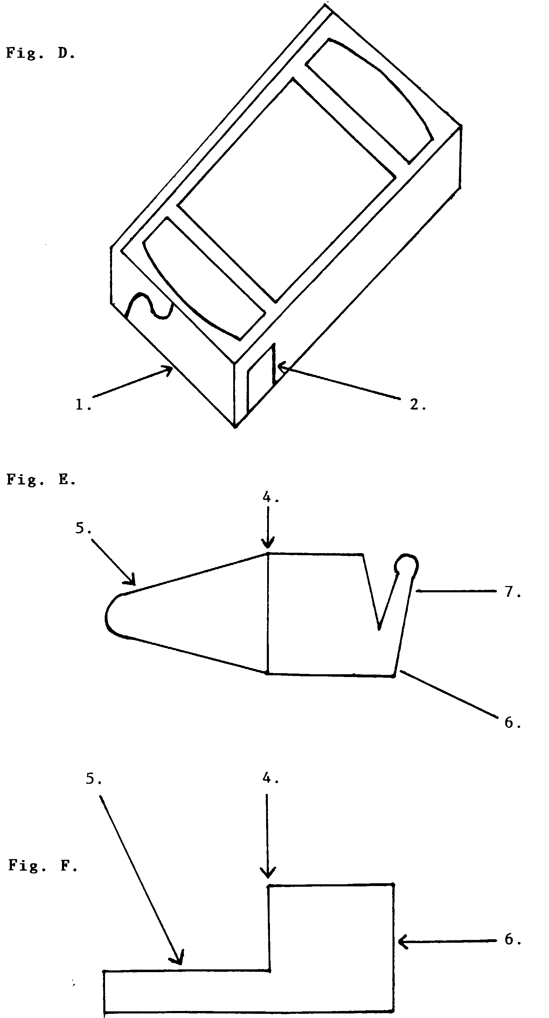

## Claims

1. The videotape, provide with an arised hole, that means without the recording defeat tab, but now the videotape is **MARKED** with an invention: **THE VIDEOCLIP**, which sticks in the hole.
The Videoclip can be used repeatedly, and because off the elasticity, the Videoclip is easy to fix and easy to remove.
The Videoclip is a replacement and an improvement off the recording defeat tab.
After removing the recording defeat tab (with a screwdriver), the videotape is prevent against accidental erasure off prerecorded tapes .
The recording defeat tab is now useless.
To record over tapes when the recording defeat tab is removed, cover the hole with adhesive tape.
For a better and longer life off prerecorded tapes: put the Videoclip in the hole for recording.
To prevent accidental erasure off prerecorded tapes remove the Videoclip.
Because off the elasticity, the Videoclip is easy to fix and easy to remove.
The Videoclip can be used time after time again.
